# EUROPEAN PATENT APPLICATION

(11) **EP 1 406 399 A1**
(43) Date of publication of application: **07.04.2004**
(21) Application number: 02745947.8
(22) Date of filing: 11.07.2002
(51) Int. Cl.: H04B 7/08

(54) **RADIO COMMUNICATION DEVICE, RADIO COMMUNICATION METHOD, AND RADIO BASE STATION DEVICE**

(30) Priority: 12.07.2001 JP 2001212620
(71) Applicant: MATSUSHITA ELECTRIC INDUSTRIAL CO., LTD., Kadoma-shi, Osaka 571-8501 (JP)
(72) Inventor: HIRAMATSU, Katsuhiko, Yokosuka-shi, Kanagawa 238-0031 (JP)
(74) Representative: Grünecker, Kinkeldey, Stockmair & Schwanhäusser Anwaltssozietät
(86) International application number: PCT/JP2002/007035
(87) International publication number: WO 2003/007503

(57) **Abstract**

The present invention arranges antennas in such a way that sector areas (AR0 to AR5) assigned to their respective antennas (AN0 to AN5) partially overlap with each other between neighboring antennas and carries out transmission/reception using the two antennas corresponding to the overlapped section.

## Description

### Technical Field

The present invention relates to a radio communication apparatus, radio communication method and radio base station apparatus that use a plurality of antennas, allow those antennas to cover sector areas and carry out transmission/reception using these sector areas as communication units.

### Background Art

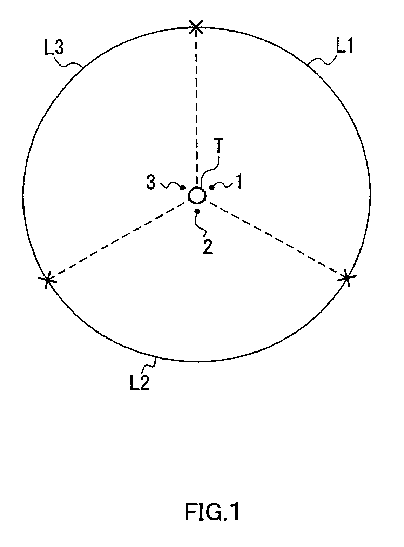

Conventionally, a mobile communication system such as CDMA (Code Division Multiple Access) divides a communication area into a plurality of cells centered on a radio base station. Each radio terminal apparatus communicates with a radio base station corresponding to a cell to which the radio terminal apparatus belongs. Furthermore, each cell is divided into a plurality of sectors L1, L2 and L3 centered on the radio base station as shown in FIG.1.

That is, a radio wave tower T, which is installed at the radio base station is provided with a plurality of directional antennas 1, 2 and 3 and these directional antennas 1, 2 and 3 take charge of transmission/reception within the sectors L1, L2 and L3 respectively. There is a proposal for a method of increasing the capacity of uplink and downlink by adopting array antennas as these antennas. That is, for the uplink, it is possible to improve the quality of communication with the respective radio terminal apparatuses by suppressing signals of apparatuses other than a radio terminal apparatus with which they are communicating and thereby increase the number of communicable radio terminal apparatuses. For the downlink, it is possible to increase the capacity of the downlink by narrowing the range of transmission directivity and thereby suppressing interference with other sectors and cells.

By the way, in a radio communication system such as a CDMA system, a difference occurs in the time of arrival at an antenna based on lengths of transmission paths between a signal directly arriving from a radio terminal apparatus and a signal arriving after being reflected by a building, etc. This results in interference between signals called "multipath interference" which deteriorates the reception signals. To solve this problem, the CDMA carries out path diversity using a RAKE combiner and thereby reduces deterioration of the received signals by multipath interference.

As a method for reducing deterioration of the received signals due to differences in lengths of transmission paths and moving speed of radio terminals, there is spatial diversity in addition to the aforementioned path diversity and if the radio base station described in FIG.1 can also carry out spatial diversity as well as path diversity, it will further improve the reception quality.

However, a radio wave tower of a radio base station is under various constraints such as space for installation of antennas, directivity and sector area assigned to each antenna, which makes it difficult to realize an array antenna in combination with spatial diversity.

### Disclosure of Invention

It is an object of the present invention to provide a radio communication apparatus, radio communication method and radio base station apparatus with improved communication quality by enabling each antenna to obtain a sufficient spatial diversity effect when each antenna covers a predetermined sector area and carries out transmission/reception.

This object is attained by arranging the respective antennas in such a way that sector areas assigned to their respective antennas partially overlap with each other between neighboring antennas and by carrying out transmission/reception using the two antennas corresponding to those overlapped sector areas.

### Brief Description of Drawings

FIG.1 illustrates a conventional arrangement of antennas and sector areas;
FIG.2 illustrates an arrangement of antennas and sector areas in a radio communication apparatus and radio communication method according to the present invention;
FIG.3 is a characteristic diagram to illustrate directivity gain of an antenna used in an embodiment;
FIG.4 is a characteristic diagram to illustrate directivity gain in various directions when antennas are arranged as shown in FIG.2;
FIG.5 is a characteristic diagram to illustrate directivity gain for each sector;
FIG.6 is a block diagram showing a configuration of a reception apparatus according to Embodiment 1;
FIG.7A illustrates a directivity pattern of one of antennas whose directivities overlap with each other;
FIG.7B illustrates a directivity pattern of the other one of the antennas whose directivities overlap with each other;
FIG.8 is a block diagram showing a configuration of a transmission apparatus according to Embodiment 2;
FIG.9A illustrates a scrambling code sent from one of antennas whose directivities overlap with each other; and
FIG.9B illustrates a scrambling code sent from the other one of the antennas whose directivities overlap with each other.

### Best Mode for Carrying out the Invention

With reference now to the attached drawings, embodiments of the present invention will be explained in detail below.

### (Embodiment 1)

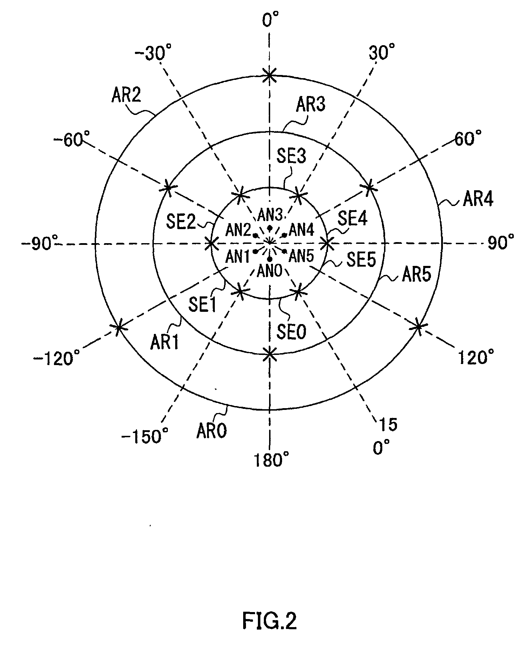

FIG.2 illustrates an arrangement of antennas and sector configuration for a base station radio wave tower according Embodiment 1. There is a plurality of sector antennas AN0 to AN5 in the periphery of the base station radio wave tower and the sector antennas AN0 to AN5 are assigned sector areas AR0 to AR5 respectively. When a signal arrives from a direction of one of the sector areas AR0 to AR5, the sector antennas AN0 to AN5 that cover the corresponding sector areas AR0 to AR5 receive the signal.

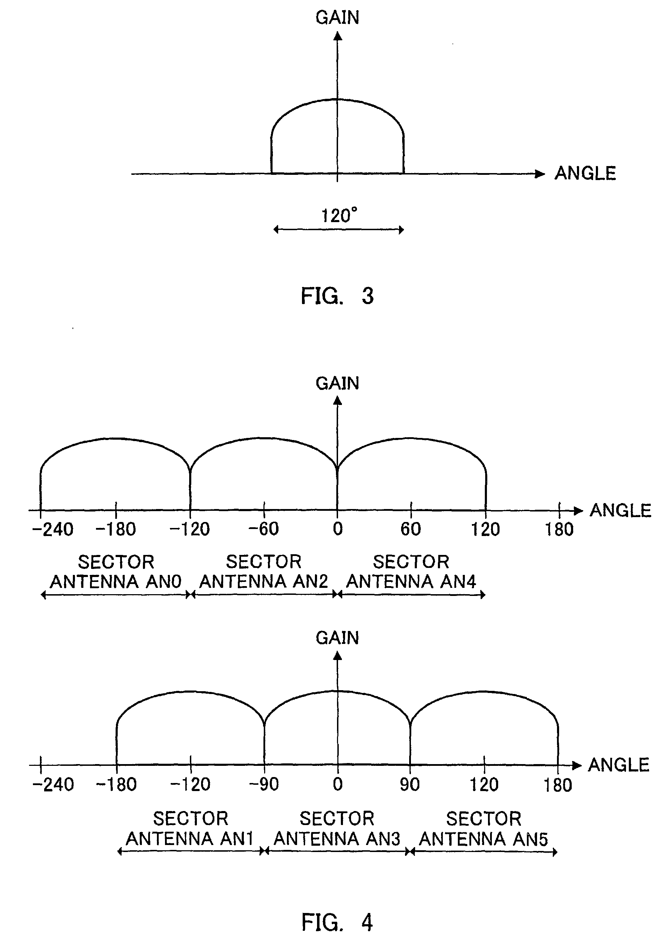

In this embodiment, as shown in FIG. 3, the one among the sector antennas AN0 to AN5 that has directivity capable of attaining sufficient reception gain in a range of central angle of 120° is used. Then, as shown in FIG.2, the assigned sector areas AR0 to AR5 are arranged in such a way as to partially overlap with each other between neighboring antennas.

More specifically, reception coverage areas that cover the circumferential direction of the radio wave tower are formed by the sector area AR0 of the sector antenna AN0, sector area AR2 of the sector antenna AN2 and sector area AR4 of the sector antenna AN4. In the case of this embodiment, the sector antennas AN1, AN3 and AN4 are provided in intermediate positions of the sector antennas AN0, AN2 and AN4. This allows mutually neighboring sector areas SE0 to SE5 of the sector antennas AN0 to AN5 to overlap with each other in such a way as to cover all circumferential directions of the radio wave tower.

As a result, this embodiment ensures that signals arriving from any direction of the radio wave tower can be received at two of the sector antennas AN0 to AN5 at different locations. This allows a combination circuit, which will be described later, to carry out sufficient spatial diversity processing.

Here, FIG.4 shows gain characteristics of the respective sector antennas AN0 to AN5. As is apparent from the figure, since the sector antennas AN0 to AN5 are arranged in such a way that neighboring two of the sector areas AR0 to AR5 overlap with each other by half of each area, it is possible to obtain sufficient reception gain in all directions around the radio wave tower.

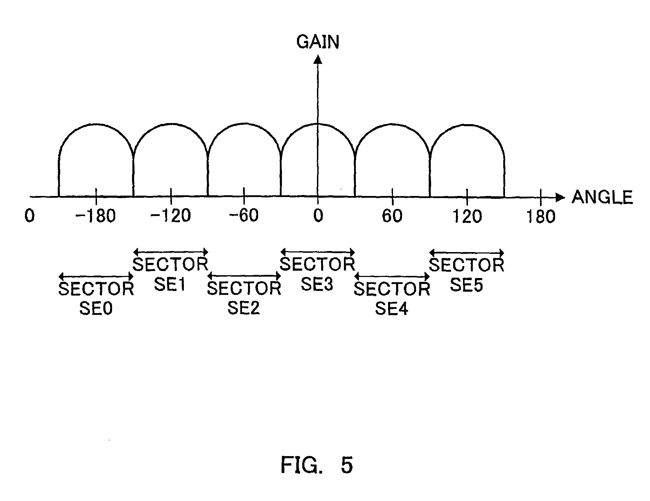

Furthermore, as shown in FIG.2 and FIG.4, this embodiment specifies new sector areas SE0 to SE5 obtained by further segmenting the sector areas AR0 to AR5 formed by the respective sector antennas AN0 to AN5 based on the mutually overlapping sector areas AR0 to AR5. That is, the sector areas SE0 to SE5 are specified as shown in FIG.5.

More specifically, the sector area SE0 is formed of the sector antenna AN0 and its neighboring sector antennas AN1 and AN5, the sector area SE1 is formed of the sector antenna AN1 and its neighboring sector antennas AN0 and AN2, and the sector area SE2 is formed of the sector antenna AN2 and its neighboring sector antennas AN1 and AN3.

Likewise, the sector area SE3 is formed of the sector antenna AN3 and its neighboring sector antennas AN2 and AN4, the sector area SE4 is formed of the sector antenna AN4 and its neighboring sector antennas AN3 and AN5, and the sector area SE5 is formed of the sector antenna AN5 and its neighboring sector antennas AN4 and AN6. This embodiment can increase the number of sector areas and thereby increase a communication capacity that can be covered by the radio base station.

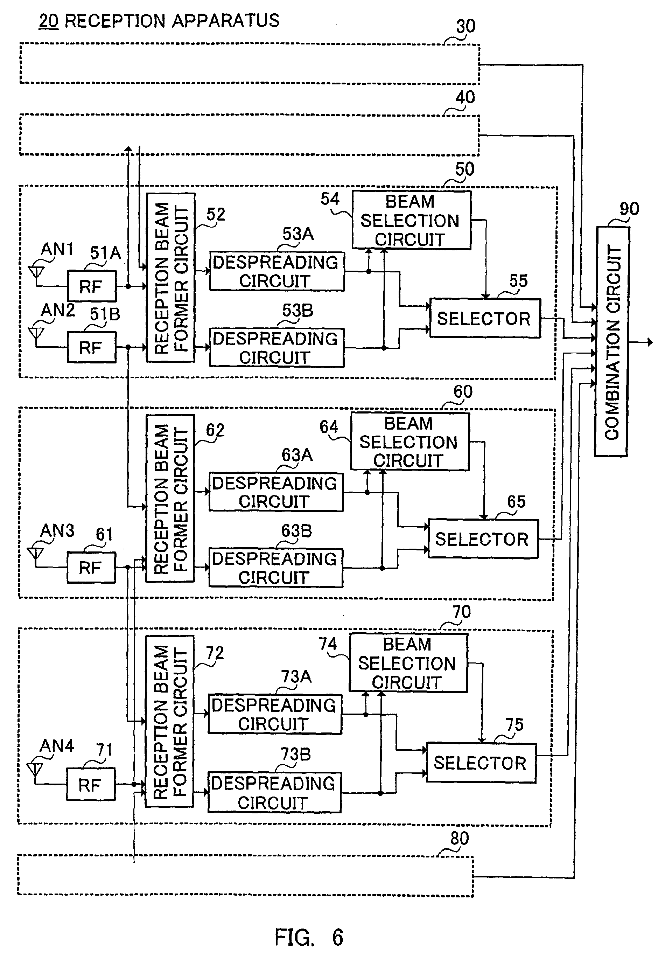

Then, a reception apparatus using the sector antennas AN0 and AN5 arranged as described above will be explained. In FIG.6, the reception apparatus 20 is designed to receive a signal which has been digital-modulated according to a CDMA system and transmitted by radio.

The reception apparatus 20 is provided with reception demodulation sections 30, 40, 50, 60, 70 and 80 provided for the sector areas SE0 to SE5 respectively and a combination circuit 90 for realizing spatial diversity combination on the outputs from the reception demodulation sections 30, 40, 50, 60, 70 and 80 using a RAKE combining technique. This embodiment uses adaptive array antennas as the sector antennas AN0 to AN5.

Here, all the reception demodulation sections 30, 40, 50, 60, 70 and 80 have the same configuration, and therefore the reception demodulation sections 50, 60 and 70 will be explained below. The reception demodulation section 60 receives an uplink signal arriving from the direction of the sector area SE3 in FIG.2 through the sector antennas AN2 andAN3 and sends the received signals to reception RF circuits 51B and 61 respectively. The reception RF circuits 51B and 61 down-convert the received signals. With regard to the reception of the sector area SE3 here, the sector antenna AN2, reception RF circuit 51B, sector antenna AN4 and reception RF circuit 71 can be shared with the reception demodulation sections 50 and 70.

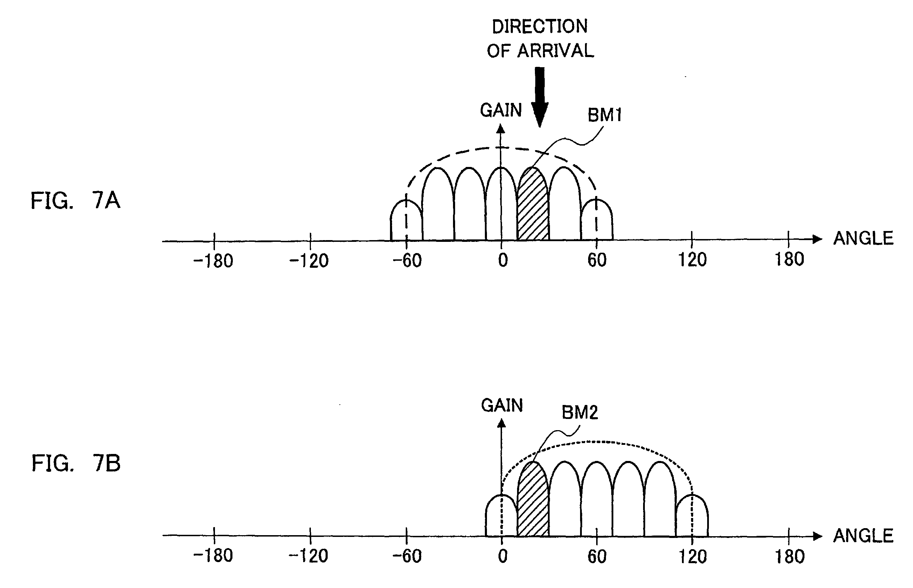

The down-converted signal is sent to a reception beam former circuit 62 as a multi-beam forming section. The reception beam former circuit 62 is designed to be able to form independent directivity patterns corresponding in number to the antennas for an input signal. In the case of this embodiment, each of the sector antennas AN0 to AN5 is constructed of 6 elements, and therefore the reception beam former circuit 62 forms six independent directivity patterns as shown in FIG.7.

FIG.7A shows the result of independent directivity patterning processing by the reception beam former circuit 62 on the signal received through the sector antenna AN3 and FIG.7B shows the result of independent directivity patterning processing by the reception beam former circuit 72 on the signal received through the sector antenna AN4. By the way, when the center is considered to be 0° as shown in FIG.7A, seven beams are actually formed, but since directivity of a 120° element antenna corresponding to the two beams at both ends are -60° and +60°, the directivity gains of these beams at both ends are small.

The output of the reception beam former circuit 62 is led through an analog/digital conversion circuit which is not shown and then input to despreading circuits 63A and 63B, respectively. The despreading circuits 63A and 63B are each constructed of a matched filter where the input signal is multiplied by a spreading code and returned to the signal before the spreading. Then, the despread signal is sent to a beam selection circuit 64 and a selector 65 as a reception antenna selection section.

The beam selection circuit 64 selects a beam of good quality from among the despread signals. More specifically, a beam whose reception power is greater than a predetermined threshold is selected as a measure of quality. For example, assuming a case where a signal arrives in a direction of 20° as shown in FIG.7, two beams BM1 and BM2 expressed by the shaded area are selected. At this time, since reception power of other beam selection circuits 54, 74, ··· does not exceed the threshold, no beam is selected.

The selection result of the beam selection circuit 64 is sent to the selector 65. The selector 65 selects a despread beam signal corresponding to the selection result of the beam selection circuit 64 and sends it to a combination circuit 90 that follows. The other reception demodulation sections 30, 40, 50, 70 and 80 also have the same function as that of the reception demodulation section 60.

That is, the reception demodulation section 50 receives an uplink signal arriving from the direction of the sector area SE2 through the sector antenna AN1 and at the same time receives the signal through the sector antennas AN0 and AN2 and sends the received signals to the reception RF circuits 51A, 51B, ···, respectively. Then, the received signals are down-converted by the reception RF circuits 51A, 51B, ···, sent to the reception beam former circuit 52 where independent directivity patterns corresponding in number to the antennas are formed for the input signals.

The output of the reception beam former circuit 52 is led through an analog/digital conversion circuit which is not shown and then input to despreading circuits 53A and 53B, respectively. The signals despread by the despreading circuits 53A and 53B are sent to a beam selection circuit 54 and a selector 55. Then, the beam signal with greater reception power according to the result of a threshold decision at the beam selection circuit 54 is output from the selector 55 to the combination circuit 90.

Likewise, the reception demodulation section 70 receives an uplink signal arriving from the direction of the sector area SE4 through the sector antenna AN4 and at the same time receives the signal through the antennas AN3 and AN5 and sends the received signals to the reception RF circuits 71, 61, ···, respectively. Then, the received signals are down-converted by the reception RF circuits 71, 61, ···, sent to the reception beam former circuit 72 where independent directivity patterns corresponding in number to the antennas are formed for the input signals.

The output of the reception beam former circuit 72 is led through an analog/digital conversion circuit which is not shown and then input to despreading circuits 73A and 73B, respectively. The signals despread by the despreading circuits 73A and 73B are sent to a beam selection circuit 74 and a selector 75. Then, the beam signal with greater reception power according to the result of a threshold decision at the beam selection circuit 74 is output from the selector 75 to the combination circuit 90.

Thus, beam signals are selectively sent from the reception demodulation sections 30, 40, 50, 60, 70 and 80 to the combination circuit 90. The combination circuit 90 is constructed of a so-called RAKE receiver and is designed to be able to concentrate signal power, which has been spread during transmission bymatching the phases of the input beam signals and then combining the beam signals.

At this time, the combination circuit 90 carries out not only path diversity processing on one beam signal but also spatial diversity processing on two beam signals that form a pair, and can thereby effectively eliminate multipath interference components and obtain reproduced waveforms with little deterioration.

Thus, the reception apparatus 20 always receives arriving signals through two neighboring antennas of the sector antennas AN0 to AN5 and can thereby carry out spati al diversity processing by the combination circuit 90 that follows. This makes it possible to eliminate multipath interference components more effectively.

Furthermore, by providing the received signals obtained through the sector antennas AN0 to AN5 with local directivity patterns through the reception beam former circuits 52, 62, 72, ···, beam selection circuits 54, 64, 74, ···, and selectors 55, 65, 75, ···the reception apparatus 20 can carry out spatial diversity processing on received signals of good quality. As a result, the reception apparatus 20 can obtain reproduced waveforms much less deterioration.

In the above-described configuration, when, for example, a signal arrives from a direction of 20°, the reception apparatus 20 receives this signal by the mutually neighboring sector antennas AN3 and AN4 which cover this sector area SE3.

At this time, since the sector areas AR3 and AR4 originally covered by the sector antennas AN3 and AN4 overlap with the sector area SE3, sufficient directivity gain can be obtained from the sector antennas AN3 and AN4.

As a result, since signals having sufficient directivity gain are obtained from the two sector antennas AN3 and AN4 at different locations, the reception apparatus 20 applies spatial diversity combination to these received signals, and can thereby obtain large spatial diversity gain.

In addition, the reception apparatus 20 transforms the signals received by the two sector antennas AN3 and AN4 to multi-beams through the reception beam former circuit 72, and can thereby form local directivity patterns. Then, from among those beams, beams exceeding a predetermined threshold are selected as targets for spatial diversity processing.

Thus, the reception apparatus 20 can adaptively change local directivity gains according to the directions of arriving signals, and thereby obtain received signals with much greater directivity gains. Combining these received signals in this way through spatial diversity can obtain much greater spatial diversity gains.

Thus, according to the above-described configuration, the sector antennas AN0 to AN5 are located in such a way that the sector areas AR0 to AR5 assigned to the sector antennas AN0 to AN5 respectively partially overlap with each other between neighboring sector antennas AN0 to AN5 and signals are received using two of the sector antennas AN0 to AN4 or AN5 corresponding to the overlapping parts, and it is therefore possible to obtain sufficient spatial diversity gains. As a result, it is possible to realize the reception apparatus 20 of improved reception quality.

### (Embodiment 2)

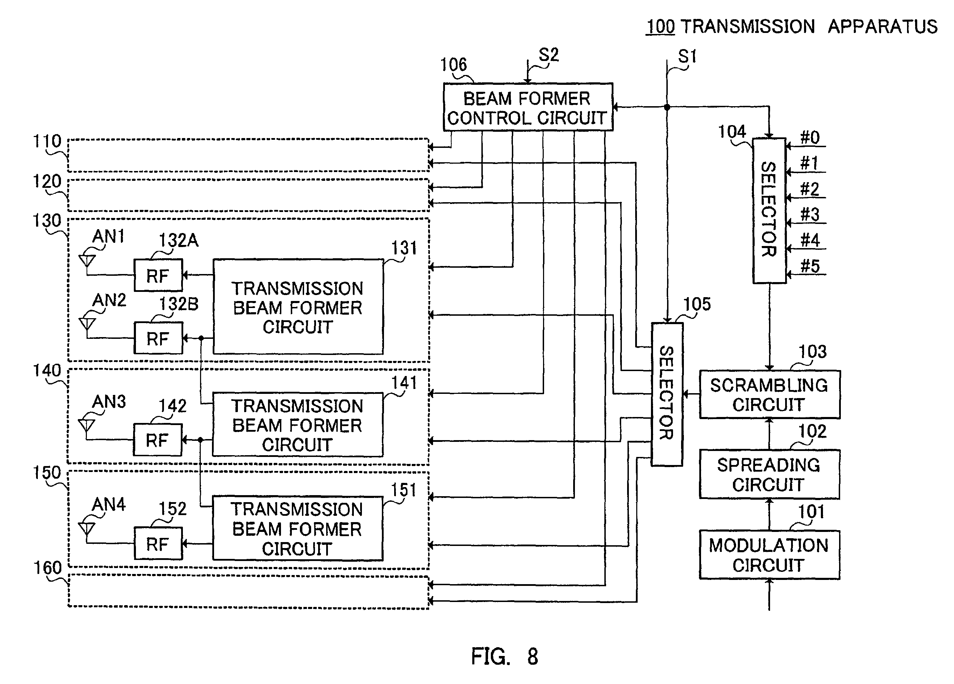

FIG.8 shows a configuration of a transmission apparatus 100 of a radio communication apparatus according to Embodiment 2. The transmission apparatus 100 is provided on the same radio base station as that of the reception apparatus 20 described above in Embodiment 1.

The transmission apparatus 100 also uses the sector antennas AN0 to AN5 described above in Embodiment 1 as transmission antennas as well. In the transmission apparatus 100, when a signal is input to a modulation circuit 101, the modulation circuit 101 applies modulation processing to the input signal and sends the processed signal to a spreading circuit 102. The spreading circuit 102 carries out spreading processing by multiplying the input modulated signal by a predetermined spreading code and sends the processed signal to a scrambling circuit 103.

The scrambling circuit 103 multiplies the spread signal by scrambling codes #0 to #5 from a selector 104. The scrambling codes #0 to #5 are codes to identify selector areas SE0 to SE5, specific to the respective sectors having a one-to-one correspondence with the respective sector areas SE0 to SE5. In the case of this embodiment, there are six sector areas SE0 to SE5, and therefore six types of scrambling codes #0 to #5 are provided.

The transmission apparatus 100 sends a sector information signal S1 to selectors 104 and 105 and a beam former control circuit 106. The sector information signal S1 is obtained when the reception apparatus 20 (FIG. 6) receives a signal from a radio terminal apparatus, by the base station apparatus determining to which sector area SE0 to SE5 the radio terminal apparatus belongs.

That is, in order to realize soft handover, a CDMA system requires that the radio base station should always notify the radio terminal apparatus of the sector area SE0 to SE5 to which the radio terminal apparatus currently belongs, and therefore the transmission apparatus 100 adds the corresponding scrambling code to the transmission signal through the scrambling circuit 103.

When the scrambled signal output from the scrambling circuit 103 is input, the selector 105 selectively outputs this signal to any one of the transmission sections 110, 120, 130, 140, 150 and 160 based on a sector information signal S1. For example, when the sector information signal S1 represents the sector area SE3, the selector 105 sends the scrambled transmission signal in which a scrambling code #3 is scrambled to the transmission section 140 and transmission section 130 or 150. Likewise, when the sector information signal S1 represents the sector area SE4, the selector 105 sends the scrambled transmission signal in which a scrambling code #4 is scrambled to the transmission section 150 and transmission section 140 or 160.

The beam former control circuit 106 is fed the sector information signal S1 and beam position information signal S2, forms beam former control signals to drive/control the transmission beam former circuits 131, 141, 151, ··· based on them and sends the beam former control signals to the transmission beam former circuits 131, 141, 151, ··· of the respective transmission sections 110, 120, 130, 140, 150 and 160. This allows the transmission beam former circuits 131, 141, 151, ··· to form the same beams as those selected at the time of reception.

The transmission beam former circuits 131, 141, 151, ··· form a plurality of independent directivity patterns to divide directivity of each sector antenna AN0 to AN5 as described above in FIG.7. The outputs of the transmission beam former circuits 131, 141, 151, ··· are up-converted by transmission RF circuits 132A, 132B, 142, 152, ··· and then supplied to the sector antennas AN0 to AN5.

In the above-described configuration, when data is transmitted to a radio terminal apparatus which is a transmission target, the transmission apparatus 100 adds the scrambling codes #0 to #5 representing the sector area SE0 to SE5 to which the radio terminal apparatus belongs to the transmission signal. At this time, as the scrambling codes #0 to #5, the transmission apparatus 100 adds the scrambling codes #0 to #5 for identifying the new sector areas SE0 to SE5 formed by neighboring sectors of the sector areas AR0 to AR5, overlapping with each other instead of those for identifying the sector areas AR0 to AR5 originally covered by the sector antennas AN0 to AN5.

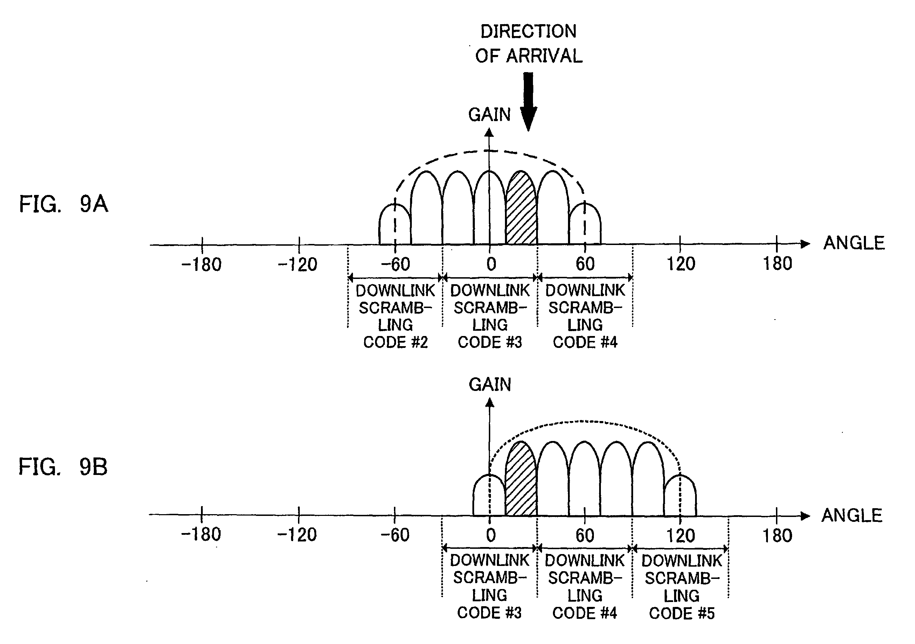

More specifically, as shown in FIG.9, data is transmitted with the scrambling code #2 added to the new sector area SE2, the scrambling code #3 added to the sector area SE3, and the scrambling code #5 added to the new sector area SE5.

Furthermore, the transmission apparatus 100 transforms the transmission outputs of the sector antennas AN0 to AN5 to multi-beams through the transmission beam former circuits 131, 141, 151, ··· and thereby provides the sector antennas AN0 to AN5 with local directivity patterns. Then, during reception, the transmission apparatus 100 selects a beam corresponding to the direction of the signal received from the terminal apparatus from among a plurality of beams and performs transmission with directivity.

As a result, the transmission apparatus 100 can perform transmission with a large directivity gain using two sector antennas and thereby improve the transmission quality.

Thus, according to the above-described configuration, when the reception apparatus 20 arranges the sector antennas AN0 to AN5 so that the sector areas AR0 to AR5 assigned to the sector antennas AN0 to AN5 respectively partially overlap with each other between neighboring sector antennas AN0 to AN5 and receives data using two of the sector antennas AN0 to AN4 or AN5 corresponding to the overlapped section, it is possible to implement the transmission apparatus 100 corresponding to this reception apparatus, capable of transmitting data with great directivity gains.

### (Other embodiments)

The above-described embodiments have described the case where adaptive array antennas are used as the sector antennas AN0 to AN5, but the present invention is not limited to this and is also applicable to other array antennas having predetermined directivity, and what is important is adopt antennas capable of forming sector areas having directivities in predetermined directions.

Furthermore, the above-described embodiments have described the case where a so-called beam steering technique is used as the method of providing the sector antennas AN0 to AN5 with local directivity patterns, but the present invention is not limited to this and can also be adapted so as to form local directivity patterns using a null steering technique, for example.

Furthermore, the above-described embodiments have described the case where the radio communication apparatus and its method are applied to a radio base station apparatus, but the present invention is not limited to this and what is important is that the present invention is widely applicable to a radio communication apparatus which assigns predetermined sector areas to antennas, selects antennas corresponding to sector areas where a radio communication apparatus is located and performs transmission/reception.

Furthermore, the above-described embodiments use the sector antennas AN0 to AN5 which are capable of obtaining sufficient directivity gains within a range of 120°, but the present invention is not limited to this and can also use antennas capable of obtaining sufficient directivity gains within a range of 90° or 60°, for example.

Furthermore, the above-described embodiments have described the case where signals modulated according to a CDMA system are received or transmitted, but the present invention is not limited to this and is also applicable to a case where signals modulated according to other modulation systems such as TDMA (Time Division Multiple Access) and FDMA (Frequency Division Multiple Access) are transmitted or received.

The radio communication apparatus of the present invention is a radio communication apparatus that arranges a plurality of antennas, assigns predetermined sector areas to the respective antennas and selects an antenna corresponding to a sector area where a radio terminal apparatus, a transmission/reception target, is located to carry out transmission/reception, adopting a configuration including a plurality of antennas each having directivity of a predetermined angle arranged in such a way that the sector areas assigned to those antennas partially overlap with each other between mutually neighboring antennas, a reception antenna selection section that selects, when a signal arrives from the overlapped sector areas, the mutually neighboring antennas that cover the overlapped sector areas as the reception antennas and a combining section that combines received signals obtained from the respective selected antennas through spatial diversity combining.

According to this configuration, when a signal arrives from the direction of a certain sector area, the signal is received by two mutually neighboring antennas that cover this sector area. At this time, since the sector areas covered by those two antennas overlap with each other, with the signals can be received with sufficient power from both antennas. Thus, since it is possible to obtain received signals with sufficient reception power from two antennas at different locations, applying spatial diversity combining to these received signals makes it possible to obtain greater diversity gains and improve the communication quality.

Furthermore, the radio communication apparatus of the present invention uses adaptive array antennas as the antennas and adopts a configuration including a variable directivity section that provides these adaptive array antennas with a plurality of local directivity patterns within a directivity range of a predetermined angle and adaptively changes the direction of local directivity according to the directions of arriving signals.

According to this configuration, the arriving signals are received by two adaptive array antennas and received in such a way as to be included in the local directivity range of the two adaptive array antennas, and therefore the combining section is fed two received signals with much greater reception power. As a result, the combining section can obtain much greater spatial diversity gains and further improve the communication quality.

Furthermore, the radio communication apparatus of the present invention adopts a configuration in which the variable directivity section includes a multi-beam forming section that forms a plurality of beams for directivity of the adaptive array antennas and a beam selection section that decides a gain of each beam based on a threshold, selects beams exceeding the threshold and sends those beams to the combining section.

According to this configuration, the multi-beam forming section provides the adaptive array antennas with directivity, and can thereby easily provide local directivity patterns within a range of a predetermined angle. Furthermore, deciding the gain of each beam based on a threshold and selecting beams facilitates the processing of adaptively changing the direction of local directivity according to the direction of arrival of a received signal.

Furthermore, the radio communication apparatus of the present invention is a radio communication apparatus that arranges a plurality of antennas, assigns predetermined sector areas to the respective antennas and selects an antenna corresponding to a sector area where a radio terminal apparatus, a transmission/reception target, is located to carry out transmission/reception, adopting a configuration including a plurality of antennas each having directivity of a predetermined angle arranged in such a way that the sector areas assigned to those antennas partially overlap with each other between mutually neighboring antennas and a transmission antenna selection section that selects, when a signal is transmitted to the overlapped sector areas, the mutually neighboring antennas that cover the overlapped sector areas as the transmission antennas.

According to this configuration, when a transmission signal is transmitted toward a certain sector area, two mutually neighboring antennas that cover these sector areas are selected. At this time, since the sector areas covered by those two antennas overlap with each other, it is possible to transmit signals with sufficient directivity gains from both antennas. Thus, two transmission signals with sufficient directivity gains are input to the radio terminal apparatus that receives these transmission signals. This results in improved communication quality.

Furthermore, the radio communication apparatus of the present invention uses adaptive array antennas as the antennas and adopts a configuration including a variable directivity section that provides these adaptive array antennas with a plurality of local directivity patterns within a directivity range of a predetermined angle and adaptively changes the direction of local directivity according to the directions of transmitting signals.

According to this configuration, the transmission signals are transmitted by two adaptive array antennas and transmitted in such a way as to be included in the local directivity range of the two adaptive array antennas, and therefore the radio terminal apparatus is fed two transmission signals with much greater reception power. This results in the further improved communication quality.

Furthermore, the radio communication apparatus of the present invention adopts a configuration in which the transmission antenna selection section selects mutually neighboring antennas that cover sector areas corresponding to sector position information indicating a sector to which a radio terminal apparatus belongs from among a plurality of adaptive array antennas based on the sector position information, the variable directivity section forms a plurality of beams on the adaptive array antennas as local directivity patterns and selects beams corresponding to the selected beams from among a plurality of beams during reception.

According to this configuration, it is possible to easily select a transmission antenna corresponding to the position of the radio terminal apparatus currently in communication and easily select a beam corresponding to the position.

Furthermore, the radio base station apparatus of the present invention is provided with any one of the above-described radio communication apparatuses and arranges antennas along the circumference of a radio wave tower.

According to this configuration, during reception, it is possible to obtain received signals with sufficient reception power from two antennas at different locations, thereby obtain large spatial diversity gains and improve the reception quality. Furthermore, during transmission, it is also possible to transmit transmission signals with sufficient directivity gains from two antennas corresponding to the position of the radio terminal apparatus and thereby improve the transmission quality.

Furthermore, the radio communication method of the present invention is a radio communication method that arranges a plurality of antennas, assigns predetermined sector areas to the respective antennas and selects an antenna corresponding to a sector area where a radio terminal apparatus, a transmission/reception target, is located to carry out transmission/reception, including the steps of arranging the plurality of antennas each having directivity of a predetermined angle in such a way that the sector areas assigned to those antennas partially overlap with each other between mutually neighboring antennas, selecting, when a signal arrives from overlapped sector areas, the mutually neighboring antennas that cover the overlapped sector areas as the reception antennas and combining received signals obtained from the respective selected antennas through spatial diversity combining.

According to this method, when a signal arrives from the direction of a certain sector area, the signal is received by two mutually neighboring antennas that cover these sector areas. At this time, since the sector areas covered by those two antennas overlap with each other, the signal with sufficient power can be received from both antennas. As a result, applying spatial diversity combining to these received signals obtained from these two antennas makes it possible to obtain greater diversity gains and thereby improve the communication quality.

Furthermore, the radio communication method of the present invention transforms the selected antenna outputs to multi-beams, decides a gain of each beam based on a threshold and applies spatial diversity combining to beams exceeding the threshold.

According to this method, directivity gains are further increased, and therefore it is possible to obtain greater spatial diversity gains. This results in further improved communication quality.

Furthermore, the radio communication method of the present invention is a radio communication method that arranges a plurality of antennas, assigns predetermined sector areas to the respective antennas and selects an antenna corresponding to a sector area where a radio terminal apparatus, a transmission/reception target, is located to carry out transmission/reception, including the steps of arranging the plurality of antennas each having directivity of a predetermined angle in such a way that the sector areas assigned to those antennas partially overlap with each other between mutually neighboring antennas and selecting, when a signal is transmitted to the overlapped sector areas, the mutually neighboring antennas that cover the overlapped sector areas as the transmission antennas.

According to this method, when a signal is transmitted toward a certain sector area, two mutually neighboring antennas that cover these sector areas are selected. At this time, since the sector areas covered by those two antennas overlap with each other, it is possible to transmit signals with sufficient directivity gains fromboth antennas. Thus, two received signals with sufficient directivity gains are input to the radio terminal apparatus that receives this transmission signal. This results in improved communication quality.

Furthermore, when selecting transmission antennas, the radio communication method of the present invention selects mutually neighboring antennas that cover sector areas corresponding to sector position information indicating a sector to which a radio terminal apparatus belongs from among the plurality of antennas based on the sector position information and provides the antennas with local directivity patterns when outputting transmission signals from the selected antennas.

According to this method, it is possible to easily select a transmission antenna corresponding to the position of the radio terminal apparatus currently in communication and easily transmit transmission signals with much greater directivity gains.

As described above, the present invention arranges antennas in such a way that the sector areas assigned to their respective antennas partially overlap with each other between mutually neighboring antennas, carries out transmission/reception using the two antennas corresponding to the overlapped section, and can thereby obtain a sufficient spatial diversity effect and improve the communication quality as a consequence.

This application is based on the Japanese Patent Application No. 2001-212620 filed on July 12, 2001, entire content of which is expressly incorporated by reference herein.

### Industrial Applicability

The present invention is applicable to a radio communication apparatus, radio communication method and radio base station apparatus that carry out transmission/reception with each antenna covering a predetermined sector area.

## Claims

1. A radio communication apparatus that arranges a plurality of antennas, assigns predetermined sector areas to the respective antennas and selects an antenna corresponding to a sector area where a radio terminal apparatus, a transmission/reception target, is located to carry out transmission/reception, comprising:
a plurality of antennas each having directivity of a predetermined angle arranged in such a way that said sector areas assigned to those antennas partially overlap with each other between mutually neighboring antennas;
a reception antenna selection section that selects, when a signal arrives from said overlapped sector areas, the mutually neighboring antennas that cover said overlapped sector areas as the reception antennas; and
a combining section that combines received signals obtained from the respective selected antennas through spatial diversity combining.

2. The radio communication apparatus according to claim 1, wherein said antennas are constructed of adaptive array antennas and said communication apparatus further comprises a variable directivity section that provides said adaptive array antennas with a plurality of local directivity patterns within a directivity range of a predetermined angle and adaptively changes the direction of local directivity according to the directions of the arriving signals.

3. The radio communication apparatus according to claim 2, wherein said variable directivity section comprising:
a multi-beam forming section that forms a plurality of beams for directivity of the adaptive array antennas; and
a beam selection section that decides a gain of each beam based on a threshold, selects beams exceeding the threshold and sends those beams to the combining section.

4. A radio communication apparatus that arranges a plurality ofantennas,assignspredeterminedsector areas to the respective antennas and selects an antenna corresponding to a sector area where a radio terminal apparatus, a transmission/reception target, is located to carry out transmission/reception, comprising:
a plurality of antennas each having directivity of a predetermined angle arranged in such a way that said sector areas assigned to those antennas partially overlap with each other between mutually neighboring antennas; and
a transmission antenna selection section that selects, when a signal is transmitted to said overlapped sector areas, the mutually neighboring antennas that cover said overlapped sector areas as the transmission antennas.

5. The radio communication apparatus according to claim 4, wherein said antennas are constructed of adaptive array antennas and said radio communication apparatus further comprises a variable directivity section that provides said adaptive array antennas with a plurality of local directivity patterns within a directivity range of a predetermined angle and adaptively changes the direction of local directivity according to the directions of transmitting signals.

6. The radio communication apparatus according to claim 5, wherein said transmission antenna selection section selects mutually neighboring antennas that cover sector areas corresponding to sector position information indicating a sector to which a radio terminal apparatus belongs from among a plurality of adaptive array antennas based on said sector position information, said variable directivity section forms a plurality of beams on the adaptive array antennas as local directivity patterns and selects beams corresponding to the selected beams from among the plurality of beams during reception.

7. A radio base station apparatus comprising the radio communication apparatus according to claim 1, wherein antennas are arranged along the circumference of a radio wave tower.

8. A radio communication method that arranges a plurality of antennas and assigns predetermined sector areas to the respective antennas and selects an antenna corresponding to a sector area where a radio terminal apparatus, a transmission/reception target, is located to carry out transmission/reception, comprising the steps of:
arranging said plurality of antennas each having directivity of a predetermined angle in such a way that said sector areas assigned to those antennas partially overlap with each other between mutually neighboring antennas, selecting, when a signal arrives from said overlapped sector areas, the mutually neighboring antennas that cover said overlapped sector areas as the reception antennas and combining received signals obtained from the respective selected antennas through spatial diversity combining.

9. The radio communication method according to claim 8, further comprising the steps of transforming the outputs of the selected antennas to multi-beams, deciding a gain of each beam based on a threshold and applying spatial diversity combining to beams exceeding the threshold.

10. A radio communication method that arranges a plurality of antennas, assigns predetermined sector areas to the respective antennas and selects an antenna corresponding to a sector area where a radio terminal apparatus, a transmission/reception target, is located to carry out transmission/reception, comprising the steps of:
arranging said plurality of antennas each having directivity of a predetermined angle in such a way that said sector areas assigned to those antennas partially overlap with each other between mutually neighboring antennas and selecting, when a signal is transmitted to said overlapped sector areas, the mutually neighboring antennas that cover said overlapped sector areas as the transmission antennas.

11. The radio communication method according to claim 10, further comprising the steps of selecting, when selecting transmission antennas, mutually neighboring antennas that cover sector areas corresponding to sector position information indicating a sector to which a radio terminal apparatus belongs from among the plurality of antennas based on said sector position information and providing said antennas with local directivity patterns when outputting transmission signals from the selected antennas.
